# EUROPEAN PATENT APPLICATION

(11) **EP 2 725 812 A1**
(43) Date of publication of application: **30.04.2014**
(21) Application number: 13171866.0
(22) Date of filing: 13.06.2013
(51) Int. Cl.: H04N 21/418, H04N 21/436, H04N 21/4363, H04W 84/02, H04W 88/08

(54) **Medium, electronic device, connection system, and connection control method**

(30) Priority: 23.10.2012 JP 2012233695
(71) Applicant: Kabushiki Kaisha Toshiba, Tokyo 105-8001 (JP)
(72) Inventor: Kito, Toshiyuki, Tokyo, 105-8001 (JP)
(74) Representative: Henkel, Breuer & Partner

(57) **Abstract**

According to one embodiment, an electronic device for performing function setting for a medium having a function of operating as an access point and a function of operating as a client, includes: a command generating portion configured to generate a command for switching operation of the medium as an access point to operation of the medium as a client; and a transmission portion configured to transmit the command to the medium.

## Description

### CROSS REFERENCE TO RELATED APPLICATION(S)

The application is based upon and claims the benefit of priority from Japanese Patent Application No. 2012-233695 filed on October 23, 2012, the entire contents of which are incorporated herein by reference.

### BACKGROUND

### 1. Field

Embodiments of the present invention relate to a medium, an electronic device, a connection system and a connection control method.

### 2. Description of the Related Art

In order to keep service continuously, a device such as a TV (television) having a function of a DMS (Digital Media Server) etc. which is a server for providing contents in DLNA (Digital Living Network Alliance) guidelines cannot be disconnected from an access point. Therefore, the device needs to operate the medium as a client and connect the medium to the access point when the device is assumed to link with the medium.

### BRIEF DESCRIPTION OF THE DRAWINGS

A general configuration that implements the various features of embodiments will be described with reference to the drawings. The drawings and the associated descriptions are provided to illustrate embodiments and not to limit the scope of the embodiments.
Fig. 1 is a schematic view of a wireless connection system according to an embodiment;
Fig. 2 is a block diagram showing an example of configuration of a portable image sensing device according to an embodiment;
Fig. 3 is a block diagram showing an example of configuration of an electronic device (TV) which is used in the wireless connection system according to the embodiment and which is provided on a side to set wireless LAN connection for a medium;
Fig. 4 is a diagram showing functional blocks around a medium which is used in the wireless connection system according to the embodiment and which is provided on a side for which wireless LAN connection is set from an electronic device (TV) 50;
Fig. 5 is a diagram showing functional blocks of the electronic device (TV) which is used in the wireless connection system according to the embodiment and which is provided on a side to set wireless LAN connection for an electronic device (portable image sensing device) 40;
Fig. 6 is a sequence chart for explaining a setting operation used in the wireless connection system according to the embodiment;
Fig. 7 is a sequence chart for explaining a setting operation used in the wireless connection system according to the embodiment; and
Fig. 8 is a sequence chart for explaining a setting operation used in the wireless connection system according to the embodiment.

### DETAILED DESCRIPTION

According to one embodiment, an electronic device for performing function setting for a medium having a function of operating as an access point and a function of operating as a client, includes: a command generating portion configured to generate a command for switching operation of the medium as an access point to operation of the medium as a client; and a transmission portion configured to transmit the command to the medium.

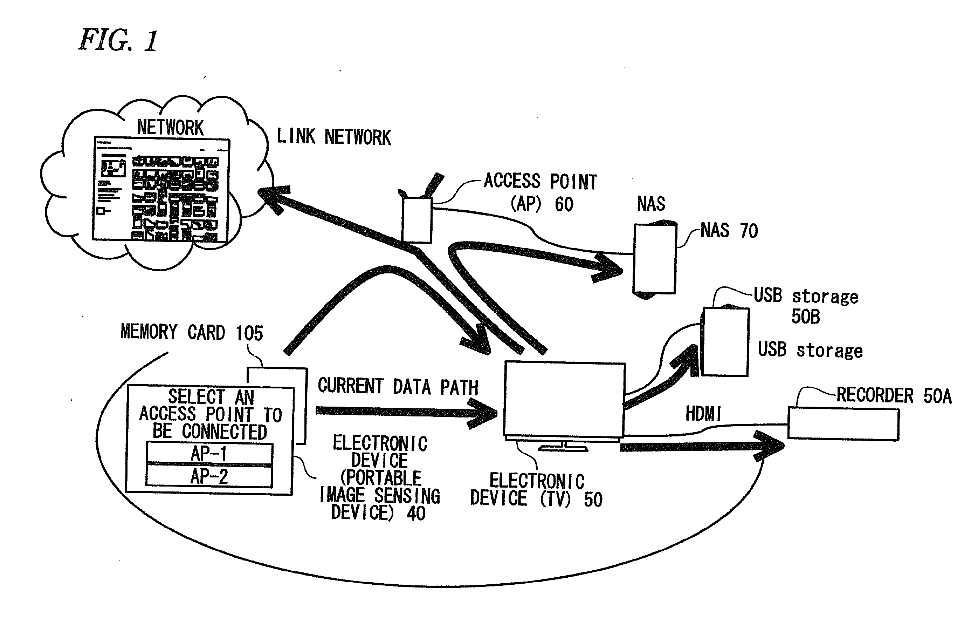

An embodiment of the invention will be described below with reference to Figs. 1 to 8.

Fig. 1 is a schematic view of a wireless connection system according to the embodiment.

In architecture for communication among a large number of terminals, the form of wireless LAN connection viewed from a client side can be roughly classified into two modes in accordance with whether an access point is used or not. The mode in which an access point is used is an infrastructure mode. That is, each wireless LAN client performs communication via an access point.

Therefore, as shown in Fig. 1, this embodiment is configured so that an electronic device (portable image sensing device) 40 and an electronic device (TV) 50 can be first connected to each other by wireless via an access point (AP) 60. Incidentally, a recorder 50A and a USB storage 50B are connected to the electronic device (TV) 50 through an HDMI and a USB interface respectively. The electronic device (TV) 50 is formed so that the electronic device (TV) 50 can be connected to an NAS 70 via the access point (AP) 60.

A memory card 105 which is a medium is attached into the electronic device (portable image sensing device) 40. FlashAir (registered trademark) is an example of the medium. This is a wireless LAN function-equipped SD card in which an access point function and an HTTP server function are mounted so that a photograph taken by the portable image sensing device and stored in the memory card can be browsed and saved from a Web browser in a personal computer, a smart phone, a tablet, etc.

Incidentally, the memory card 105 needs to be designed so that a wireless LAN can be set in an SD card having no setting screen.

From this state, it is preferable that the portable image sensing device 40 has a UI for making the memory card 105 select an access point. For example, selection buttons AP-1 and AP-2 are arranged under an operation prompt "Select an access point to be connected." on a display screen, so that the memory card 105 can be connected to another access point when a key is inputted after selection. It is however impossible to expect this function so much from the portable image sensing device. With respect to a current data path in the embodiment, the memory card 105 cannot but use ad hoc mode (peer-to-peer mode or independent mode) connection as an access point or using no access point for the electronic device (TV) 50.

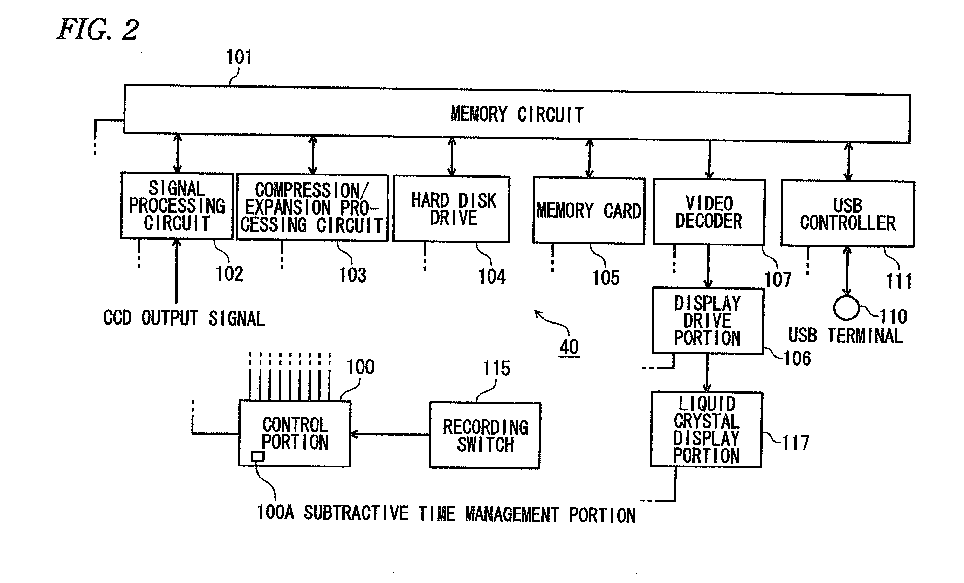

Fig. 2 is a block diagram of the portable image sensing device according to the embodiment. Incidentally, Fig. 2 shows main part of the portable image sensing device 40.

This block diagram mainly shows a processing system of a CCD (Charge-Coupled Devices) output signal based on a motion image sensed by a solid state image sensor of the portable image sensing device 40. This processing system includes a control portion 100 which controls operation of respective portions, a memory circuit 101, a signal processing circuit 102, a compression/expansion processing circuit 103, a hard disk drive 104, a memory card 105, a display drive circuit 106, a video decoder 107, a USB controller 111 connected to a USB terminal 110, and a liquid crystal display portion 117.

The memory circuit 101 is provided between the control portion 100 and the respective portions and temporarily holds a large data quantity signal outputted from the control portion 100.

The signal processing circuit 102 applies predetermined signal processing to the CCD output signal which is an image signal.

The compression/expansion processing circuit 103 applies compression/expansion processing to the CCD output signal in accordance with a still image or a motion image. In this embodiment, a still image is subjected to compression/expansion processing based on JPEG (Joint Photographic Expert Group) standards whereas a motion image is subjected to compression/expansion processing based on MPEG (Motion Picture Experts Group) standards.

The hard disk drive 104 is a storage portion which manages still images, motion images and other data recorded based on a file system of FAT32.

The video decoder 107 performing signal processing for display on the liquid crystal display portion 117 by decoding the CCD output signal based on the image sensed by the image sensor not shown, and outputs the processed signal to the display drive portion 106.

The USB controller 111 transmits/receives still image or motion image data to/from a personal computer (PC) or another electronic device through the USB terminal 110.

The control portion 100 has a subtractive time management portion 100A which is operated by pushing of a recording switch 115 from the outside and which executes an operation of changing the lapsed time of sensing of motion image displayed on a display screen of the liquid crystal display portion 117 based on a predetermined condition to subtractive time display until the data quantity of a motion image file recorded on the hard disk drive 104 or the memory card 105 reaches 8GB when, for example, the data quantity approaches 8GB.

The CCD output signal is converted into a digital signal by an A/D conversion portion not shown. After the digital signal is inputted to the camera signal processing portion 102 and subjected to predetermined signal processing, the signal is subjected to compression processing by the compression/expansion processing circuit 103 and recorded on the hard disk drive 104 or the memory card 105 through the memory circuit 101. On this occasion, the sensed image is displayed on the liquid crystal display portion 117 through the video decoder 107 and the display drive portion 117.

At playback time, the image read from the hard disk drive 104 or the memory card 105 is inputted to the compression/expansion processing circuit 103 through the memory circuit 101. After the image is subjected to expansion processing, the image is outputted to the video decoder 107 through the memory circuit 101 and displayed on the liquid crystal display portion 117 through the display drive portion 106.

When the still image or motion image recorded on the hard disk drive 104 or the memory card 105 is to be transferred to an external device or to be received from an external device, the image is transmitted/received to/from the USB terminal 110 through the USB controller 111.

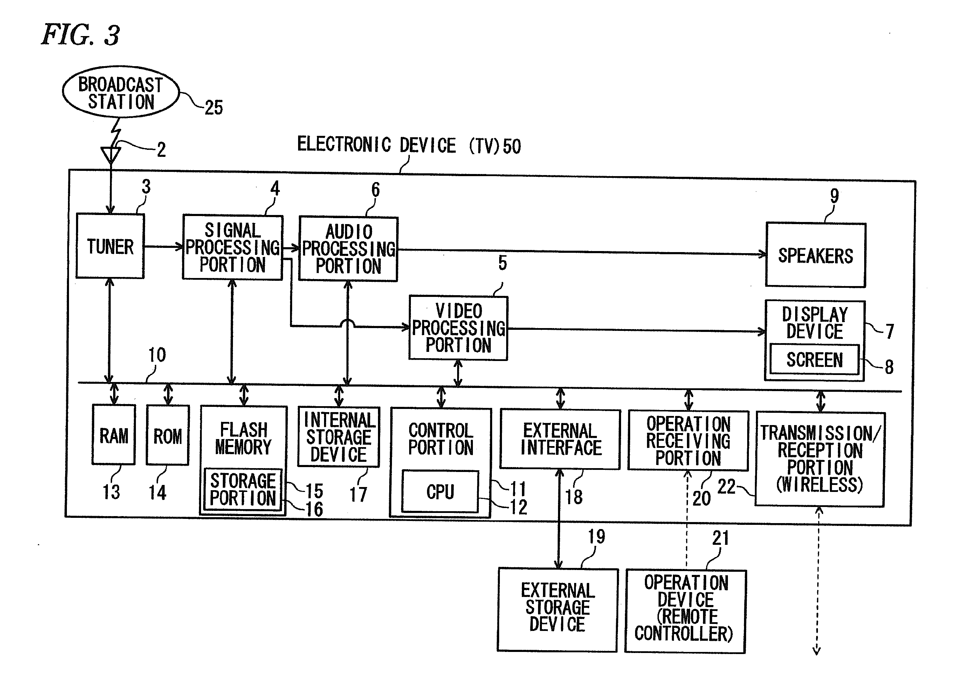

Fig. 3 is a block diagram showing an example of configuration of an electronic device (TV) which is used in the wireless connection system according to the embodiment and which is provided on a side to set wireless LAN connection for a medium.

In this embodiment, a control portion 11 has a CPU (12). The CPU (12) controls the electronic device (TV) 50.

For example, an RAM (13), an ROM (14) and a flash memory 15 are used for processing performed by the control portion 11.

The flash memory 15 can also store information of devices set in this system and information of users set in advance.

For example, video contents are broadcast as digital broadcasting from a broadcast station 25. The digital broadcasting from the broadcast station 25 is received by a tuner 3 and subjected to channel selection processing, so that video contents of the digital signal are transmitted to a signal processing portion 4.

The video contents of the digital signal received by the signal processing portion 4 is subjected to signal processing and then transmitted to an audio processing portion 6 and a video processing portion 5.

The audio processing portion 6 receives video contents subjected to signal processing and transmits a signal subjected to audio processing to speakers 9.

The speakers 9 receive the signal subjected to audio processing and output audio.

On the other hand, the video processing portion 5 receives video contents subjected to signal processing and transmits a signal subjected to video processing to a display device 7.

The display device 7 receives the signal subjected to video processing and displays video on a display screen (video display portion) 8 made of an LCD panel, etc.

In this embodiment, the electronic device (TV) 50 has an external storage device 19 USB-connected or LAN-connected as described above. The received video contents can be also recorded on the external storage device 19.

In this embodiment, the electronic device (TV) 50 has an internal storage device 17. The internal storage device 17 can record all received broadcast programs for time-shift playback in the same manner as the external storage device 19.

As described above, user's operation of the electronic device (TV) 50 is designated by an operation device such as a remote controller 21.

These processes are controlled by the control portion 11 as described above.

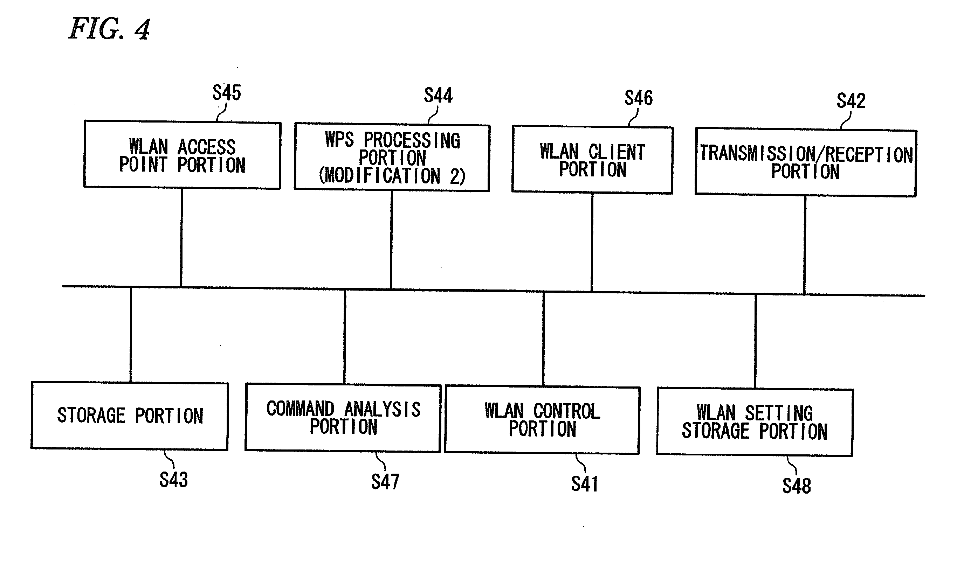

Fig. 4 is a view showing functional blocks around the memory card 105 of the electronic device (portable image sensing device) 40 which is used in the wireless connection system according to the embodiment and which is provided on a side for which wireless LAN connection is set from the electronic device (TV) 50, etc.

In this embodiment, the memory card 105 forms a WLAN control portion 41, a transmission/reception portion 42, a storage portion 43, a WPS processing portion 44, a WLAN access point portion 45, a WLAN client portion 46, a command analysis portion 47 and a WLAN setting storage portion 48 under supply of resources such as a power supply of the electronic device (portable image sensing device) 40 as shown in Fig. 4.

The transmission/reception portion 42 performs transmission/reception of data. The storage portion 43 holds photographs or motion images. The WPS processing portion 44 performs WPS (Wi-Fi Protected Setup (registered trademark)) processing. The WLAN access point portion 45 operates as a WLAN access point. The WLAN client portion 46 operates as a WLAN client.

The command analysis portion 47 analyzes a command received from the transmission/reception portion 42 and acquires WLAN setting information. The WLAN control portion 41 performs wireless LAN processing and switches one of operation as an access point and operation as a client over to the other. The WLAN control portion 41 stores the acquired WLAN setting information in the WLAN setting storage portion 48 and connects to an access point through the WLAN client portion 46. The WLAN setting storage portion 48 holds information concerned with connection to the access point.

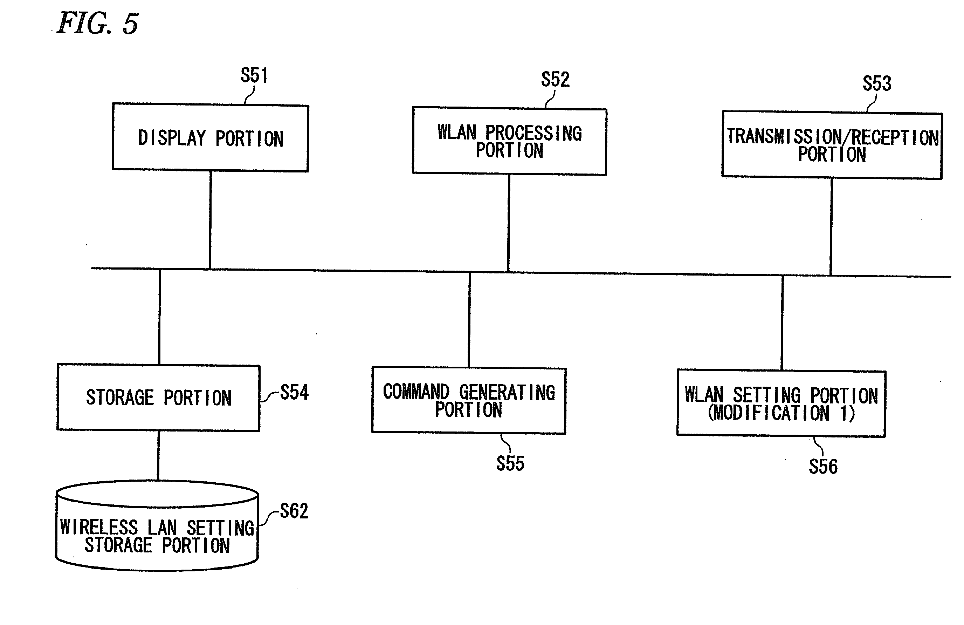

Fig. 5 is a view showing functional blocks of the electronic device (TV) 50 which is used in the wireless connection system according to the embodiment and which is provided on a side to set wireless LAN connection for the electronic device (portable image sensing device) 40.

In this embodiment, as shown in Fig. 5, the electronic device (TV) 50 forms a display portion 51, a WLAN processing portion 52, a transmission/reception portion 53, a storage portion 54, a command generating portion 55, a WLAN setting portion 56, and a wireless LAN setting storage portion 62.

The display portion 51 displays a UI concerned with connection to the side to be set and LAN setting. For example, a result of scanning electronic devices (devices) capable of being connected to the electronic device (TV) 50 is displayed. The WLAN processing portion 52 operates as a wireless LAN client. The transmission/reception portion 53 transmits/receives data.

The storage portion 54 holds the UI. The command generating portion 55 generates a command concerned with information of connection to a wireless LAN access point on the side to be set.

The WLAN setting portion 56 performs processing for urging the user to execute WLAN setting through the UI when there is no wireless LAN setting. The wireless LAN setting storage portion 62 stores wireless LAN setting.

The wireless LAN setting storage portion 62 holds SSID and KEY necessary for wireless LAN connection.

SSID is an abbreviation of Service Set Identifier. For example, this is an identifier of an access point in an IEEE 802.11 series wireless LAN. For example, any alphanumeric characters up to 32 characters at the most can be arbitrarily set as a name given to avoid interference.

SSID extended to a network identifier in consideration of a network in which a plurality of access points are disposed is called ESSID. Incidentally, SSID may be referred to as in the sense of ESSID.

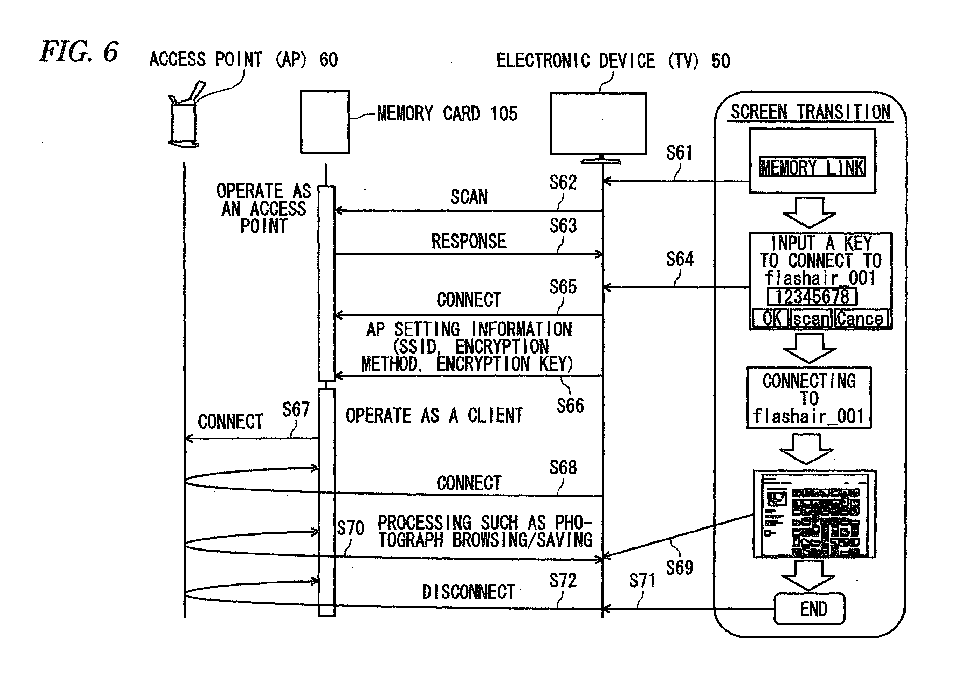

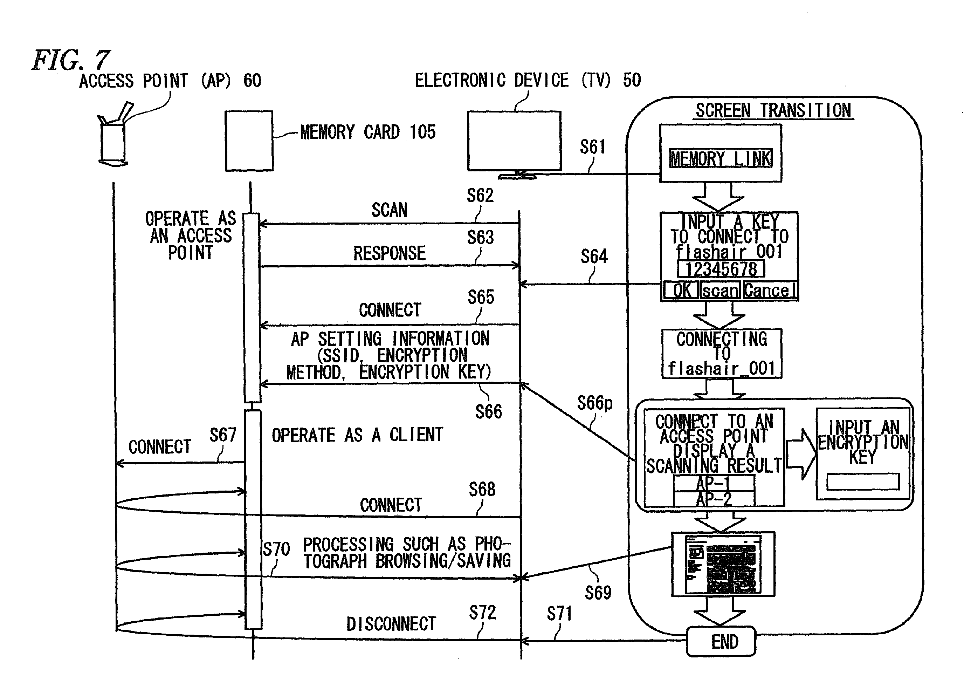

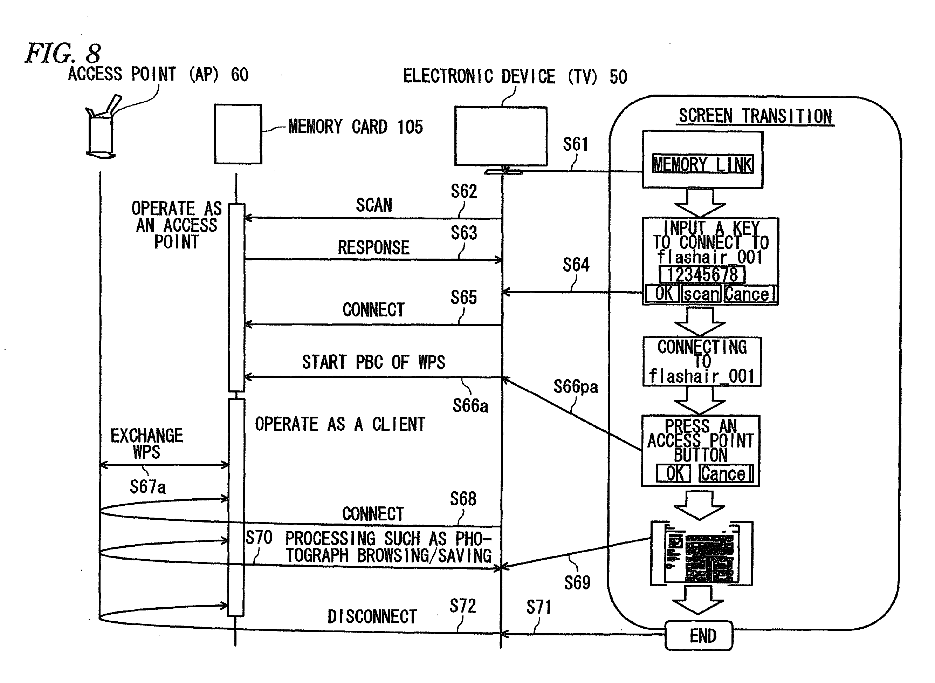

Figs. 6 to 8 are sequence charts for explaining setting operation used in the wireless connection system according to the embodiment. Description of Fig. 6 will be made first but description of parts common with those in Fig. 6 will be omitted from Figs. 7 and 8.

Fig. 6 shows an example of sequence in which the electronic device (TV) 50 connects the memory card 105 to the access point (AP) 60 by wireless LAN setting.

First, link with the medium memory card 105 is displayed as a screen transition in the electronic device (TV) 50 and the sequence goes next (step S61). Next, the electronic device (TV) 50 scans the LAN (step S62). A response is sent back from the access point in each channel of the LAN (step S63).

The screen is transited here and a prompt is displayed to urge the user to input a key for connection to a target medium, so that the user inputs a held key (step S64). Then, the electronic device (TV) 50 connects to this medium (step S65) and commands access point setting information (SSID, encryption method, encryption key) (step S66). For example, the encryption method is WPA2-PSK/AES.

This medium, that is, the memory card 105 has heretofore operated as an access point but will operate as a client hereafter. First, the memory card 105 connects to a target access point (AP) 60 by using the access point setting information (step S67).

Successively, the electronic device (TV) 50 connects to the memory card 105 via the access point (AP) 60 (step S68), receives an instruction from the user by using a display screen (step S69) and performs processing such as browsing and saving photographs desired by the user (step S70).

When the user gives an instruction to terminate these processes (step S71), the electronic device (TV) 50 disconnects from the memory card 105 via the access point (AP) 60 (step S72).

Fig. 7 shows an example of sequence in which the electronic device (TV) 50 connects the memory card 105 to the access point (AP) 60 by wire LAN setting. When the side to set does not use WLAN and does not hold access point connection information, setting to the access point is performed in the display portion. The sequence up to the step S65 is the same as in Fig. 6 but access point setting information (SSID, encryption method, encryption key) is designated by user's inputting before the step S66 (step S66p). When the side to set does not use WLAN and does not hold access point connection information generally, setting to the access point is performed in the display portion.

Fig. 8 shows an example of sequence in which the electronic device (TV) 50 connects the memory card 105 to the access point (AP) 60 by wire LAN setting. This is the case where setting of WPS (Wi-Fi Protected Setup (registered trademark)) is further performed. Incidentally, the case where PBC (Push Button Configuration) is used as an authentication method is taken here as an example. Although setting based on PIN codes may be used as another method, description thereof will be omitted.

For designating access point setting information (SSID, encryption method, encryption key) before the step S66, the user can push a button corresponding to the access point (step S66pa). The next two sequences are executed by use of WPS (registered trademark) (steps S66a and S67a).

After the TV is once connected to the medium, wireless LAN setting is performed on the TV and notice of the wireless LAN setting is sent by a command so that the medium having no user interface can be connected to the access point. While the TV keeps the function of DMS, photographs or motion images in the medium can be browsed on the TV.

The case where setting is performed so that a medium having both access point and client functions operates first as an access point to connect another device and then connect to an access point so as to operate as a client by using a user interface of the device has been described above in brief.
(1) Setting is performed so that a medium which has no user interface, which cannot but perform wireless LAN communication and which has both access point and client functions operates first as an access point to connect another device and then connects to an access point so as to operate as a client by using a user interface of the device.
(2) As a result of (1), the device (TV) executing setting can gain access to the medium via the access point. (This is because the device executing setting has to keep both connection to the access point and connection to the device simultaneously to keep service operating at back end, but it is impossible to achieve this due to performance of HW.)

The device executing setting can compatibly achieve both connection to the access point and connection to the memory which has no user interface, which cannot but perform wireless LAN communication and which has both access point and client functions.

Incidentally, the invention is not limited to the aforementioned embodiments but modifications may be made on the invention without departing from the gist thereof.

Constituent elements disclosed in the aforementioned embodiments may be combined suitably to form various inventions. For example, some constituent elements may be removed from all constituent elements disclosed in each embodiment. In addition, constituent elements disclosed in different embodiments may be combined suitably.

## Claims

1. An electronic device for performing function setting for a medium having a function of operating as an access point and a function of operating as a client, comprising:
a command generating portion configured to generate a command for switching operation of the medium as an access point to operation of the medium as a client; and
a transmission portion configured to transmit the command to the medium.

2. A medium comprising:
an access point portion which operates as an access point;
a client portion configured to operate as a client; and
a command analysis portion configured to work to operate the client portion as a client of another access point instead of the access point portion based on setting information from an electronic device.

3. A connection system comprising:
a medium having a function of operating as an access point and a function of operating as a client; and
an electronic device designed to be client-to-client linked to the medium by using another access point, wherein
after the medium operates as an access point, the medium operates as a client of the other access point based on setting information from the electronic device.

4. The connection system according to Claim 3, wherein
the setting information includes an access point identifier, an encryption method, and an encryption key.

5. The connection system according to Claim 3, wherein
the electronic device includes a user interface through which the setting information is inputted.

6. The connection system according to Claim 3, wherein
the electronic device includes a transmission portion configured to transmit the setting information by using Wi-Fi Protected Setup.

7. The medium according to Claim 2, wherein
the medium operates as a client of the other access point by using Wi-Fi Protected Setup in accordance with a transmission method included in the setting information from the electronic device.

8. A connection control method in a connection system including a medium having a function of operating as an access point and a function of operating as a client, and an electronic device designed to be client-to-client linked to the medium by using another access point, the connection control method comprising:
operating the medium as an access point;
and
operating the medium as a client of the other access point based on setting information from the electronic device.
